# EUROPÄISCHE PATENTSCHRIFT

(11) **EP 3 531 959 B1**
(45) Veröffentlichungstag und Bekanntmachung des Hinweises auf die Patenterteilung: **02.12.2020**
(21) Anmeldenummer: 17797288.2
(22) Anmeldetag: 30.10.2017
(51) Int. Cl.: A61C 13/00, A61C 8/00, A61C 1/08, G06T 19/20

(54) **VERFAHREN UND COMPUTER ZUR PLANUNG EINER DENTALEN KONSTRUKTION**
METHOD AND COMPUTER FOR PLANNING A DENTAL STRUCTURE
PROCÉDÉ ET ORDINATEUR POUR PLANIFICATION D'UNE STRUCTURE DENTAIRE

(30) Priorität: 31.10.2016 DE 102016221426
(43) Veröffentlichungstag der Anmeldung: 04.09.2019
(73) Patentinhaber: Sirona Dental Systems GmbH, 64625 Bensheim (DE)
(72) Erfinder: MÜLLNER, Daniel, 8046 Zürich (CH); GROSS, Clemens, 64686 Lautertal (DE)
(74) Vertreter: Özer, Alpdeniz
(86) Internationale Anmeldenummer: PCT/EP2017/077804
(87) Internationale Veröffentlichungsnummer: WO 2018/078164

(56) Entgegenhaltungen:
- EP-A1- 1 618 854
- WO-A1-2004/060197
- CN-A- 102 426 614
- DE-A1-102009 011 442
- DE-B3-102015 212 606

## Beschreibung

### Technisches Gebiet

Die Erfindung betrifft ein Verfahren zur Planung einer dentalen Konstruktion, wobei ein 3D-Modell der Konstruktion mit mindestens einer radialsymmetrischen Durchbrechung bereits vorhanden ist. Die Erfindung betrifft auch einen Computer, umfassend Mittel zur Durchführung des Verfahrens.

### Stand der Technik

Aus dem Stand der Technik sind mehrere Verfahren zur Planung einer dentalen Konstruktion bekannt, wobei die geplante Konstruktion unter Verwendung eines CAD/CAM-Verfahrens automatisch aus einem Rohling herausgefräst oder herausgeschliffen wird. Dabei werden Steuerungsbahnen festgelegt, um die Werkzeuge der Bearbeitungsmaschine anzusteuern.

Ein Nachteil dieses Verfahrens ist, dass insbesondere Durchbrechungen der Konstruktionen nicht ausreichend genau ausgearbeitet werden können, da die Werkzeuge der Bearbeitungsmaschine die Durchbrechungen teilweise schräg oder seitlich Schicht für Schicht ausarbeiten.

WO 2004/060197 A1 offenbart ein Verfahren zur automatischen Erzeugung einer dentalen Suprastruktur mit einem Implantat anhand einer digitalen Modellbeschreibung der Form, wobei durch eine Analyse der Zahnsituation eine optimale Implantatachse und eine optimale Form der Suprastruktur unter Berücksichtigung festgelegter Konstruktionsregeln festgelegt werden.

EP 1 618 854 A1 offenbart ein Verfahren und eine Vorrichtung zur Bestimmung der Lage und Orientierung eines dentalen Implantats, wobei eine klinische Situation des Implantats im Patientenmund mittels einer dentalen Kamera vermessen wird und unter Verwendung einer Anschlussgeometrie die Lage des Implantats relativ zur Zahnsituation bestimmt wird.

DE 10 2015 212 606 B3 offenbart ein Verfahren zur Herstellung eines an einem Implantat befestigten Zahnersatzteils unter Verwendung eins 3D-Modells des Zahnersatzteils, wobei ein Schraubenkanal für eine Fixierschraube konstruiert wird, wobei der Schraubenkanal zu einem Ende hin im Durchmesser zunehmend ausgestaltet ist.

DE 10 2009 011 442 A1 offenbart ein Verfahren zur Herstellung von Zahnersatzteilen, wobei eine Mehrzahl von Zahnersatzteilen durch spannende Bearbeitung aus einem Rohling herausgearbeitet wird, wobei die Zahnersatzteile innerhalb des Rohlings möglichst nah beieinander angeordnet werden, um eine effiziente Nutzung des Rohlingmaterials zu erlangen.

Die Aufgabe der vorliegenden Erfindungen besteht also darin, ein Verfahren zur Planung einer dentalen Konstruktion bereitzustellen, das eine präzise Herstellung der geplanten Konstruktion ermöglicht, wobei insbesondere Durchbrechungen der Konstruktionen möglichst genau und werkzeugschonend ausgearbeitet werden sollen.

### Darstellung der Erfindung

Die Aufgabe wird durch ein Verfahren nach Anspruch 1 und durch einen Computer, umfassend Mittel nach Anspruch 15 gelöst. Bevorzugte Ausführungsformen der Erfindung sind in den abhängigen Ansprüchen definiert.

Die Erfindung betrifft ein Verfahren zur Planung einer dentalen Konstruktion, wobei ein 3D-Modell der Konstruktion mit mindestens einer radialsymmetrischen Durchbrechung bereits vorhanden ist. Anhand des bereits vorhandenen 3D-Modells der Konstruktion wird eine Symmetrieachse der mindestens einen radialsymmetrischen Durchbrechung der Konstruktion relativ zum 3D-Modell bestimmt.

Die dentale Konstruktion kann eine beliebige Konstruktion sein, die eine radialsymmetrische Durchbrechung aufweist. Das 3D-Modell der Konstruktion ist bereits vorhanden. Das 3D-Modell kann beispielsweise ein Dreiecksnetz sein und lediglich die Form der Oberfläche der Konstruktion beschreiben. Das 3D-Modell weist jedoch zusätzlich zu der Form des Dreiecksnetzes keine Informationen über die genaue Lage und Ausrichtung der Durchbrechung auf.

Das 3D-Modell kann beispielsweise in einem generischen Datenformat für den Austausch von 3D-Modellen zwischen verschiedenen CAD-/CAM-Systemen vorliegen. Ein solches generisches Datenformat, wie beispielsweise das STL-Format, enthält lediglich ein Dreiecksnetz der Oberfläche des 3D-Modells ohne weitere Zusatzinformationen.

Anhand des vorhandenen 3D-Modells wird unter Verwendung eines computergestützten Verfahrens die Symmetrieachse der Durchbrechung automatisch oder halbautomatisch bestimmt. Die radialsymmetrische Durchbrechung kann beispielsweise ein Schraubenkanal einer implantatgetragenen dentalen Restauration, ein zylinderförmiger Führungskanal einer Bohrschablone oder auch eine Aussparung für Scankörper sein. Ein Schraubenkanal kann auch eine konische Form, zumindest teilweise eine zylindrische Form oder beliebige Aufweitungen mit diversen Profilen aufweisen.

Ein Vorteil dieses Verfahrens liegt darin, dass die Lage und Ausrichtung der Symmetrieachse relativ zum 3D-Modell automatisch oder halbautomatisch anhand des 3D-Modells bestimmt wird, so dass die Steuerungsbahnen einer CAM-Herstellungsmaschine entsprechend optimiert werden können. Durch die optimierten Steuerungsbahnen der CAM-Herstellungsmaschine können die Durchbrechungen genauer ausgearbeitet werden. Ein zweiter Vorteil ist, dass die verwendeten Werkzeuge der CAM-Herstellungsmaschine bei der Ausarbeitung aus dem Rohling geschont werden. Denn insbesondere hohe seitlich wirkende Kräfte können zum Bruch oder Beschädigung der Fräswerkzeuge oder der Schleifwerkzeuge der CAM-Bearbeitungsmaschine führen. Bei optimierten Steuerungsbahnen der CAM-Bearbeitungsmaschine werden die Fräswerkezeuge oder die Schleifwerkzeuge möglichst parallel zu der ermittelten Symmetrieachse der Durchbrechung eingesetzt, um die Durchbrechung auszuarbeiten, so dass die seitlich auf das Werkzeug wirkenden Kräfte möglichst klein sind.

Die Steuerungsbahn einer CAM-Bearbeitungsmaschine kann eine beliebige Bewegung des Werkzeugs beschreiben, wobei das Werkzeug Schicht für Schicht entlang der Steuerungsbahn bewegt wird und dadurch die Konstruktion aus dem Rohling herausgearbeitet wird.

Vorteilhafterweise kann die Konstruktion ein einzelnes Abutment mit einem Schraubenkanal, eine Brücke mit mindestens einem Schraubenkanal, eine Bohrschablone mit mindestens einem Bohrkanal, ein Abdrucklöffel mit mindestens einer Durchbrechung oder ein Modellguss mit mindestens einer Durchbrechung sein.

Ein einzelnes Abutment kann beispielsweise einen zylinderförmigen Schraubenkanal zum Einsetzen einer Schraube aufweisen. Eine Brücke kann beispielsweise mehrere zylinderförmige Schraubenkanäle zum Verbinden mit gesetzten Implantaten aufweisen. Eine Bohrschablone kann mindestens einen Bohrkanal aufweisen, der zur Führung eines Bohrers bei der Durchführung von Implantatbohrungen vorgesehen ist. In den Bohrkanal der Bohrschablone kann beispielsweise eine Führungshülse eingesetzt werden. Der Abdrucklöffel kann ebenfalls Durchbrechungen aufweisen, die genügend Raum für Scankörper bieten, die an Implantaten angebracht sind. Der Abdrucklöffel kann dabei ein individueller Abdrucklöffel sein, der unter Verwendung eines CAD/CAM-Verfahrens hergestellt wird, wobei die Durchbrechungen so gestaltet werden, dass die an den Implantaten befestigten Scankörper hindurchpassen. Ein Modellguss kann ebenfalls Durchbrechungen aufweisen, die zylinderförmig oder aufgeweitet sind. Wesentlich für das folgende Verfahren ist, dass die Konstruktion unter Verwendung eines CAD/CAM-Verfahrens mittels einer CAM-Bearbeitungsmaschine herstellbar ist.

Vorteilhafterweise kann das 3D-Modell der Konstruktion ein Dreiecksnetz sein und die Oberfläche der Konstruktion beschreiben.

Dadurch ist die Oberfläche der Konstruktion mittels des Dreiecksnetzes präzise beschrieben.

Vorteilhafterweise kann zur Bestimmung der Symmetrieachse der Durchbrechung das 3D-Modell der Konstruktion mittels einer Anzeigevorrichtung dargestellt werden und virtuell so gedreht werden, dass der Benutzer virtuell durch die Durchbrechung hindurchschauen kann, also dass der Benutzer in einer 2D-Projektion des 3D-Modells an der Anzeigevorrichtung die Durchbrechung als ein Loch sieht.

Dadurch kann also der Benutzer die Durchbrechung als ein Loch sehen, um eine vorläufige Symmetrieachse der Durchbrechung grob festzulegen. Die Anzeigevorrichtung kann beispielsweise ein Bildschirm sein.

Vorteilhafterweise kann der Benutzer einen vorläufigen Aufpunkt der Symmetrieachse innerhalb des Lochs festlegen.

Dadurch kann der Benutzer einen beliebigen Punkt innerhalb des Lochs als Aufpunkt der Symmetrieachse festlegen. Der Aufpunkt der Symmetrieachse ist der Punkt in der 2D-Projektion, durch den die Symmetrieachse geht.

Der Benutzer legt einen beliebigen Punkt innerhalb des Lochs als Aufpunkt fest, um neben der Richtung der Symmetrieachse auch die Lage der Symmetrieachse festzulegen. Die vorläufige Symmetrieachse ist dann die Gerade in Projektionsrichtung der 2D-Projektion auf dem Bildschirm durch den festgelegten Aufpunkt in der Bildschirmebene.

Vorteilhafterweise kann unter Verwendung eines computergestützten Verfahrens automatisch der Mittelpunkt des Lochs bestimmt werden, der einen vorläufigen Aufpunkt definiert, durch den die Symmetrieachse geht.

Dadurch wird der Mittelpunkt des Lochs automatisch bestimmt und als Aufpunkt der Symmetrieachse festgelegt.

Vorteilhafterweise kann bei dem computergestützten Verfahren in einer 2D-Projektion des 3D-Modells das Loch automatisch ermittelt werden, indem ein Schattenwurf des 3D-Modells segmentiert wird und anschließend der Mittelpunkt als ein Schwerpunkt des Lochs ermittelt wird.

Der Mittelpunkt des Lochs wird bestimmt, indem der Schattenwurf des 3D-Modells segmentiert wird. Bei einem Segmentierungsverfahren wird zwischen einem Außenbereich, mindestens einem Loch und der Konstruktion unterschieden, so dass eine Randlinie des Lochs oder eine Fläche jedes Lochs ermittelt wird. Der Schwerpunkt der Fläche oder der Randlinie bildet dann den Aufpunkt der vorläufigen Symmetrieachse. Dadurch wird also der Aufpunkt der Symmetrieachse vollautomatisch bestimmt.

Vorteilhafterweise kann zur Bestimmung der Symmetrieachse der Durchbrechung das 3D-Modell der Konstruktion mittels einer Anzeigevorrichtung dargestellt werden, wobei durch den Benutzer auf einer Oberfläche des 3D-Mcdells eine geschlossene Kurve um die Durchbrechung eingezeichnet wird. Die geschlossene Kurve kann auf einer Oberfläche eingezeichnet werden, die eben oder uneben ist.

Die geschlossene Kurve um die Durchbrechung kann dabei eine Windungszahl von +1 oder von -1 um die vorläufige Symmetrieachse aufweisen. Eine Windungszahl ist das Integral über die Änderungen der Winkel, unter denen die Kurve relativ zur Symmetrieachse verläuft. Das Integral wird mit 1/360 normalisiert, falls die Winkel in Grad gemessen werden. Eine Windungszahl von +1 entspricht einem Umlaufwinkel von 360°, wobei eine Windungszahl von -1 einen Umlaufwinkel von -360° entspricht. Die Zulässigkeit der beiden Vorzeichen +1 und -1 bedeutet, dass die Orientierung der Kurve unerheblich ist.

Vorteilhafterweise kann anhand der geschlossenen Kurve eine Interpolationsebene bestimmt werden, in der die geschlossene Kurve gemittelt liegt, wobei senkrecht zu der bestimmten Interpolationsebene eine vorläufige Symmetrieachse bestimmt wird, wobei als ein Aufpunkt der Symmetrieachse ein Schwerpunkt der geschlossenen Kurve bestimmt wird.

Falls die derart bestimmte vorläufige Symmetrieachse das Dreiecksnetz des 3D-Modells schneidet und daher nicht vollständig innerhalb der Durchbrechung verlaufen kann, werden durch den festgelegten Aufpunkt weitere Symmetrieachsen in zufälligen Richtungen ausprobiert, bis eine gültige Symmetrieachse gefunden wird, die sowohl das Dreiecksnetz des 3D-Modells nicht schneidet als auch mit der geschlossenen Kurve die Windungszahl +1 oder -1 bildet, oder nach einer gewissen Anzahl von Fehlversuchen die Benutzereingabe der geschlossenen Kurve mit einer Fehlermeldung verworfen wird. Die Anzahl der Fehlversuche kann beispielsweise mindestens 2000 betragen. Die Richtungen von zufälligen Versuchen der Symmetrieachsen sind dabei beispielsweise in allen Raumrichtungen ohne bestimmte Bedingungen gemäß einer Zufallsverteilung gleichverteilt.

Durch die geschlossene Kurve wird dann die Interpolationsebene gelegt. Dadurch wird die Lage und Ausrichtung der vorläufigen Symmetrieachse halbautomatisch anhand der geschlossenen Kurve bestimmt. Der Schwerpunkt der geschlossenen Kurve entspricht einem geometrischen Schwerpunkt, wobei der geometrische Schwerpunkt einem Mittelwert aller Punkte auf der geschlossenen Kurve entspricht.

Vorteilhafterweise kann die geschlossene Kurve durch das Auswählen von Ankerpunkten auf der Oberfläche der Konstruktion durch den Benutzer eingezeichnet werden, wobei durch die Ankerpunkte automatisch eine Interpolationskurve gezogen wird.

Dadurch wird eine Interpolationskurve durch die festgelegten Ankerpunkte automatisch bestimmt. Die Ermittlung der Interpolationskurve kann dabei während dem Auswählen von Ankerpunkten oder nach dem Eingabeprozess der Ankerpunkte erfolgen.

Vorteilhafterweise kann zur Bestimmung der Symmetrieachse der Durchbrechung mittels eines computergestützten Suchalgorithmus mindestens eine Durchbrechung automatisch identifiziert werden, wobei unter Verwendung eines computergestützten Algorithmus eine geschlossene Kurve um die Durchbrechung auf einer Oberfläche des 3D-Modells ermittelt wird, wobei anhand der geschlossenen Kurve eine Interpolationsebene bestimmt wird, in der die geschlossene Kurve gemittelt liegt, wobei senkrecht zu der bestimmten Interpolationsebene eine vorläufige Symmetrieachse bestimmt wird, wobei als ein Aufpunkt der Symmetrieachse ein Schwerpunkt der geschlossenen Kurve bestimmt wird.

Bei dieser Ausführungsform wird also die Durchbrechung automatisch identifiziert, eine geschlossene Kurve um die Durchbrechung automatisch festgelegt, eine Interpolationsebene durch die geschlossene Kurve automatisch bestimmt und eine vorläufige Symmetrieachse senkrecht zur Interpolationsebene automatisch festgelegt, wobei der Aufpunkt der Symmetrieachse als der geometrische Schwerpunkt der geschlossenen Kurve automatisch bestimmt wird.

Die ermittelte vorläufige Symmetrieachse wird dann getestet, ob sie geeignet ist. Falls die ermittelte vorläufige Symmetrieachse das 3D-Modell schneidet und daher nicht geeignet ist, werden durch den definierten Aufpunkt weitere Symmetrieachsen in zufälligen Richtungen ausprobiert, bis eine gültige Symmetrieachse gefunden wird, die das 3D-Modell nicht schneidet oder nach einer gewissen Anzahl von Fehlversuchen der Kandidat für eine mögliche Durchbrechung als ungültig verworfen wird. Beim Erzeugen der zufälligen Richtungen möglicher Symmetrieachsen werden beispielsweise alle Raumrichtungen gleichverteilt berücksichtigt.

Dadurch wird also das Verfahren nach dieser Ausführungsform vollautomatisch durchgeführt. Dies verkürzt die Dauer der Planung und verhindert fehlerhafte Eingaben durch den Benutzer.

Vorteilhafterweise kann die Oberfläche der Konstruktion eine Bodenfläche einer Anschlussgeometrie um die Durchbrechung der Konstruktion sein.

Die Anschlussgeometrie ist insbesondere bei implantatgetragenen Restaurationen vorhanden, um diese mit einem gesetzten Implantat zu verbinden. Die Bodenfläche der Anschlussgeometrie ist dabei eben und weist eine klare Kante auf.

Vorteilhafterweise kann zum Festlegen der geschlossenen Kurve ein computergestützter Kantensuch-Algorithmus verwendet werden, der eine Kante der Bodenfläche der Anschlussgeometrie automatisch erkennt und als die geschlossene Kurve um die Durchbrechung festlegt.

Dadurch wird die Kante der Bodenfläche der Anschlussgeometrie automatisch erkannt und als die geschlossene Kurve um die Durchbrechung festgelegt. Dadurch, dass die Bodenfläche eben ist und die Kante der Anschlussgeometrie eine kreisförmige Form aufweisen kann, wird das Festlegen der vorläufigen Symmetrieachse verbessert.

Vorteilhafterweise können bei der Anwendung des computergestützten Suchalgorithmus falsche Kandidaten für eine mögliche Symmetrieachse der Durchbrechung anhand festgelegter Kriterien aussortiert werden.

Dadurch werden die Durchbrechungen mittels des computergestützten Suchalgorithmus automatisch ermittelt, wobei falsche Kandidaten aussortiert werden. Dies erfolgt vollautomatisch, so dass die Dauer der Planung verkürzt wird und Eingabefehler durch den Benutzer verhindert werden.

Falsche Kandidaten der Symmetrieachsen werden sowohl vor der Optimierung der Symmetrieachse als auch nach der Optimierung der Symmetrieachse aussortiert.

Vorteilhafterweise kann ein erstes Kriterium zum Aussortieren falscher Kandidaten einer möglichen Symmetrieachse sein, dass eine gültige Symmetrieachse der Durchbrechung das 3D-Modell nicht schneidet.

Die Symmetrieachse verläuft also durch die Durchbrechung, ohne das 3D-Modell zu schneiden. Kandidaten für Symmetrieachsen, die dieses Kriterium nicht erfüllen werden also aussortiert.

Vorteilhafterweise kann ein zweites Kriterium zum Aussortieren falscher Kandidaten einer möglichen Symmetrieachse sein, dass die geschlossene Kurve eine Windungszahl von +1 oder -1 um eine gültige Symmetrieachse aufweist.

Dadurch wird sichergestellt, dass berechnete Symmetrieachsen aussortiert werden, die eine ungültige Richtung bezogen auf die geschlossene Kurve haben.

Vorteilhafterweise kann nach der Bestimmung einer vorläufigen Symmetrieachse der Durchbrechung eine Optimierung an einem engsten Segment der Durchbrechung erfolgen, wobei unter Anwendung eines Iterationsverfahrens die vorläufige Symmetrieachse so modifiziert wird, dass ein Zylinder um die Symmetrieachse mit einem möglichst großen Radius in die Durchbrechung hineinpasst, wobei als Ergebnis des Iterationsverfahrens eine optimierte Symmetrieachse der Durchbrechung bestimmt wird.

Die Modifikation der Symmetrieachse erfolgt dabei sowohl bezüglich ihrer Richtung als auch bezüglich ihrer Lage.

Die vorläufige Symmetrieachse wird also unter Verwendung des Iterationsverfahrens optimiert, wobei der Zylinder um die Symmetrieachse mit dem möglichst großen Radius in die Durchbrechung einbeschrieben wird. Bei diesem Verfahren erhält man also sowohl für zylindrische als auch für konische radialsymmetrische Durchbrechungen die exakte optimierte Symmetrieachse.

Vorteilhafterweise kann ein drittes Kriterium zum Aussortieren falscher Kandidaten einer möglichen Symmetrieachse nach der Optimierung sein, dass ein festgelegter Mindestabstand von einer gültigen Symmetrieachse zum 3D-Modell nicht unterschritten wird.

Dadurch werden also Kandidaten für mögliche Symmetrieachsen, die einen Abstand zum 3D-Modell aufweisen, der den Mindestabstand unterschreitet, aussortiert. Der Mindestabstand kann beispielsweise durch die Möglichkeiten der Ausarbeitung einer Durchbrechung mittels einer CAM-Bearbeitungsmaschine definiert werden. Dabei kann also der Mindestabstand einem Radius eines Fräswerkzeuges oder eines Schleifwerkzeuges der CAM-Bearbeitungsmaschine entsprechen.

Vorteilhafterweise kann ein viertes Kriterium zum Aussortieren falscher Kandidaten einer möglichen Symmetrieachse nach der Optimierung sein, dass eine Mindestlänge der Durchbrechung unterschritten wird.

Kandidaten für mögliche Symmetrieachsen werden also aussortiert, falls die Durchbrechung eine Länge von kleiner als einer festgelegten Mindestlänge aufweist. Eine Mindestlänge kann beispielsweise 2 mm oder 1 mm entlang der Symmetrieachse der Durchbrechung betragen.

Vorteilhafterweise kann nach der Festlegung der Symmetrieachse eine vollständige Rekonstruktion der radialsymmetrischen Durchbrechung bei bekannter Symmetrieachse erfolgen, wobei die rekonstruierte Durchbrechung dem bereits vorhandenen 3D-Modell der Konstruktion zugeordnet wird.

Als Ergebnis wird also die Rekonstruktion der Durchbrechung dem 3D-Modell zugeordnet. Das 3D-Modell zusammen mit der Durchbrechung kann auch mittels einer Anzeigevorrichtung dargestellt werden.

Die Form der Durchbrechung ist nicht vorbekannt, sondern wird vielmehr aus dem vorhandenen 3D-Modell rekonstruiert. Dabei wird insbesondere ein Radialprofil der Durchbrechung unter Ausnutzung der Radialsymmetrie der Durchbrechung bestimmt. Dabei werden alle Knotenpunke des 3D-Modells durch die Projektion (rho, phi, z) ↦ (rho, z) der Zylinderkoordinaten bezüglich der Symmetrieachse (Radius: rho, Polarwinkel: phi, Parameter entlang der Achse: z) in die Ebene projiziert. Anschließend werden alle Endpunkte von Kanten des 3D-Modells auch in der 2D-Projektion durch Kanten verbunden. Die Hüllkurve dieser Projektion mit minimaler rho-Koordinate ist dann das Radialprofil der Durchbrechung.

Vorteilhafterweise kann unter Berücksichtigung der Lage und der Ausrichtung der Symmetrieachse der Durchbrechung relativ zur Konstruktion sowie eines Radialprofils der Durchbrechung eine Steuerungsbahn einer CAM-Bearbeitungsmaschine optimiert werden, um die Durchbrechung möglichst exakt und schonend für mindestens ein verwendetes Werkzeug der CAM-Bearbeitungsmaschine aus einem Rohling auszuarbeiten.

Dadurch werden die Steuerungsbahnen der CAM-Bearbeitungsmaschine in Abhängigkeit von der Ausrichtung und Lage der Symmetrieachse sowie des Radialprofils optimiert. Die Steuerungsbahnen können beispielsweise so optimiert werden, dass die Bearbeitungswerkzeuge der CAM-Bearbeitungsmaschine, wie ein Fräswerkzeug oder ein Schleifwerkzeug, die Durchbrechungen weitgehend parallel zu der Symmetrieachse ausarbeiten, so dass die seitlich auf das Bearbeitungswerkzeug einwirkenden Kräfte möglichst klein sind. Die Steuerungsbahn entspricht dabei der programmierten Bahn des Bearbeitungswerkzeugs zum Ausarbeiten der Konstruktion aus dem Rohling mittels der CAM-Bearbeitungsmaschine.

### Kurzbeschreibung der Zeichnungen

Die Erfindung wird anhand der Zeichnungen erläutert. Es zeigt, die
- Fig. 1: Skizze zur Verdeutlichung des vorliegenden Verfahrens, die
- Fig. 2: eine Skizze einer Brücke mit mehreren Schraubenkanälen, die
- Fig. 3: eine Skizze einer Bohrschablone als dentale Konstruktion, die
- Fig. 4: eine Skizze zur Erläuterung des iterativen Optimierungsverfahrens.

### Ausführungsbeispiele

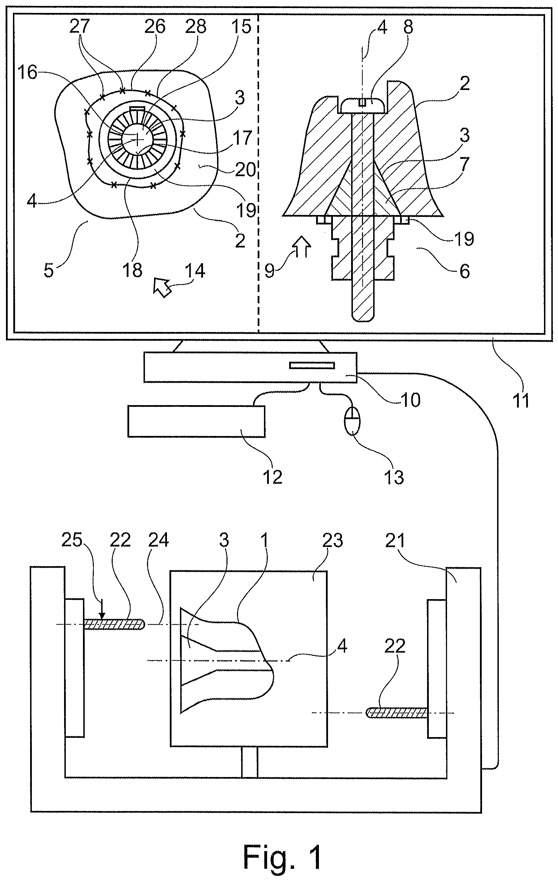

Die Fig. 1 zeigt eine Skizze zur Verdeutlichung des vorliegenden Verfahrens zur Planung einer dentalen Konstruktion 1, wie eines Abutments, wobei ein 3D-Modell 2 der Konstruktion 1 mit mindestens einer radialsymmetrischen Durchbrechung 3 bereits vorhanden ist. Anhand des bereits vorhandenen 3D-Modells 2 der Rekonstruktion 1 wird eine Symmetrieachse 4 der Durchbrechung 3 bestimmt. Die Symmetrieachse 4 ist in einer Draufsicht 5 des 3D-Modells 2 und in einer Schnittansicht 6 von der Seite als Strichpunktlinie dargestellt. In der Schnittansicht 6 ist die radialsymmetrische Durchbrechung 3 des 3D-Modells 2 mit einem zylindrischen Segment und einem konischen Segment dargestellt. Zusätzlich zur Verdeutlichung der Funktionsweise des Abutments ist eine Titanbasis 7 dargestellt, deren Anschluss als Kegelstumpf geformt ist. Beim Einsetzen des Abutments wird das Abutment 2 auf die Titanbasis aufgesetzt und mittels einer Schraube 8 mit dem bereits eingesetzten Implantat im Kiefer des Patienten verschraubt. Die dentale Konstruktion kann neben dem dargestellten Abutment 2 mit einem Schraubenkanal 3 auch eine Brücke mit mehreren Schraubenkanälen, eine Bohrschablone mit mindestens einem Bohrkanal, einem Abdrucklöffel mit mindestens einer Durchbrechung oder ein Modellguss mit mindestens einer Durchbrechung sein. Das 3D-Modell 2 der Konstruktion 1 kann beispielsweise ein Dreiecksnetz sein. Der Pfeil 9 zeigt die Richtung der Draufsicht 5 in der Seitenansicht 6. Das vorliegende computergestützte Verfahren wird mittels eines Computers 10 durchgeführt, an den eine Anzeigevorrichtung 11, wie ein Bildschirm, und an den Bedienelemente, wie eine Tastatur 12 und eine Maus 13, angeschlossen sind. Der Benutzer kann die Planung mittels der Bedienelemente 12 und 13 über einen virtuellen Cursor 14 durchführen.

Bei einer ersten Ausführungsform des Verfahrens wird die Symmetrieachse 4 der Durchbrechung 3 dadurch bestimmt, dass das 3D-Modell 2 virtuell so gedreht wird, dass der Benutzer durch die Durchbrechung 3 hindurchschauen kann, wie in der Draufsicht 5 dargestellt. Der Benutzer sieht also in einer 2D-Projektion des 3D-Modells 2 ein Loch 15 in der Durchbrechung 3. Im nächsten Schritt kann der Benutzer einen vorläufigen Aufpunkt 16 der Symmetrieachse 4 innerhalb des Lochs 15 festlegen. Der Mittelpunkt des Lochs 15 kann dabei auch automatisch mittels eines computergestützten Verfahrens bestimmt werden, indem ein geometrischer Schwerpunkt einer Randlinie 17 des Lochs 15 bestimmt wird.

Bei einem alternativen Verfahren kann die Symmetrieachse 4 der Durchbrechung 3 bestimmt werden, indem eine geschlossene Kurve 18 um die Durchbrechung 3 durch den Benutzer unter Verwendung des Cursors 14 und der Bedienungselemente 12 und 13 eingezeichnet wird. Im vorliegenden Fall kann die geschlossene Kurve 18 einer kreisrunden Kante einer Anschlussgeometrie 19 entsprechen, die zum Verbinden mit der Titanbasis 7 vorgesehen ist. Das Auswählen der geschlossenen Kurve 18 kann beispielsweise durch das Auswählen von Ankerpunkten auf einer Oberfläche 20 des 3D-Modells, im vorliegenden Fall entlang der Kante 18, erfolgen. Die Ankerpunkte werden dann durch eine Interpolationskurve miteinander verbunden.

Im ersten Schritt wird also das 3D-Modell 2 vom Benutzer nur grob ausgerichtet, bis man ein Loch 15 sieht. Anschließend erfolgt die genaue Bestimmung der Symmetrieachse mittels eines Optimierungsverfahrens.

Die Kurve 18 muss nicht präzise eingezeichnet werden und auch nicht kreisförmig sein, sondern kann schnell und ungenau eingezeichnet werden. Wesentlich ist nur, dass die Kurve 18 geschlossen ist und um die Durchbrechung 3 angeordnet ist bzw. herumläuft.

Bei einer weiteren Ausführungsform des vorliegenden Verfahrens wird mittels eines computergestützten Suchalgorithmus die Durchbrechung 3 identifiziert, wobei die geschlossene Kurve 18 automatisch festgelegt wird, wobei eine Interpolationsebene bestimmt wird, die durch die geschlossene Kurve 18 geht. Im weiteren Schritt wird senkrecht zu der Interpolationsebene eine vorläufige Symmetrieachse 4 bestimmt, wobei als Aufpunkt 16 der Symmetrieachse 4 ein geometrischer Schwerpunkt der geschlossenen Kurve 18 bestimmt wird.

Alternativ zum manuellen Auswählen der Ankerpunkte auf der geschlossenen Kurve 18 kann auch ein automatisch computergestützter Kantensuch-Algorithmus verwendet werden, der die Kante 18 beispielsweise der Anschlussgeometrie 19 automatisch erkennt und als geschlossene Kurve um die Durchbrechung 3 festlegt.

Zur Bestimmung der tatsächlichen Symmetrieachse 4 wird nach der Festlegung einer vorläufigen Symmetrieachse ein Iterationsverfahren angewandt und eine Optimierung am engsten Segment durchgeführt, indem die vorläufige Symmetrieachse so lange modifiziert wird, bis ein Zylinder mit einem möglichst großen Radius in die Durchbrechung 3 hineinpasst. Nach der Bestimmung der Symmetrieachse 4 wird eine vollständige Rekonstruktion der radialsymmetrischen Durchbrechung 3 durchgeführt, wobei die rekonstruierte Form der Durchbrechung in Abhängigkeit der ermittelten Symmetrieachse 4 relativ zum 3D-Modell angeordnet wird. Das 3D-Modell, die ermittelte Symmetrieachse 4 sowie die rekonstruierte Durchbrechung 3 können gleichzeitig mittels der Anzeigevorrichtung 11 dargestellt werden. Unter Berücksichtigung der Lage und der Ausrichtung der Symmetrieachse 4, sowie der Form der Durchbrechung, im vorliegenden Fall abschnittsweise zylindrisch und abschnittsweise konusförmig, wird eine Steuerungsbahn einer CAM-Bearbeitungsmaschine 21 optimiert, um die Durchbrechung 3 möglichst exakt und schonend für die Werkzeuge 22 der CAM-Bearbeitungsmaschine 21 aus einem Rohling 23 auszuarbeiten. Dabei wird die herzustellende Konstruktion 1 innerhalb des Rohlings 23 so angeordnet, dass die Symmetrieachse 4 parallel zu einer Mittelachse 24 des Werkzeugs 22 ausgerichtet ist. Denn falls die Symmetrieachse 4 nicht parallel ausgerichtet wird, kann es zu Hinterschnitten bei der Bearbeitung des Rohlings kommen.

Dadurch werden die seitlich auf das Werkzeug einwirkenden Kräfte, wie durch den Pfeil 25 dargestellt, während der Bearbeitung des Rohlings 23 minimiert. Dadurch wird also die Durchbrechung genauer herausgearbeitet und das mindestens eine Werkzeug 22 der CAM-Bearbeitungsmaschine geschont. Alternativ zu der kreisrunden Kante der Anschlussgeometrie 19 als die geschlossene Kurve 18 kann der Benutzer auch eine geschlossene Kurve 26 auf der unebenen Oberfläche 20 festlegen, wobei der Benutzer Ankerpunkte 27 festlegt und durch die Ankerpunkte 27 automatisch eine Interpolationskurve 28 gezogen wird.

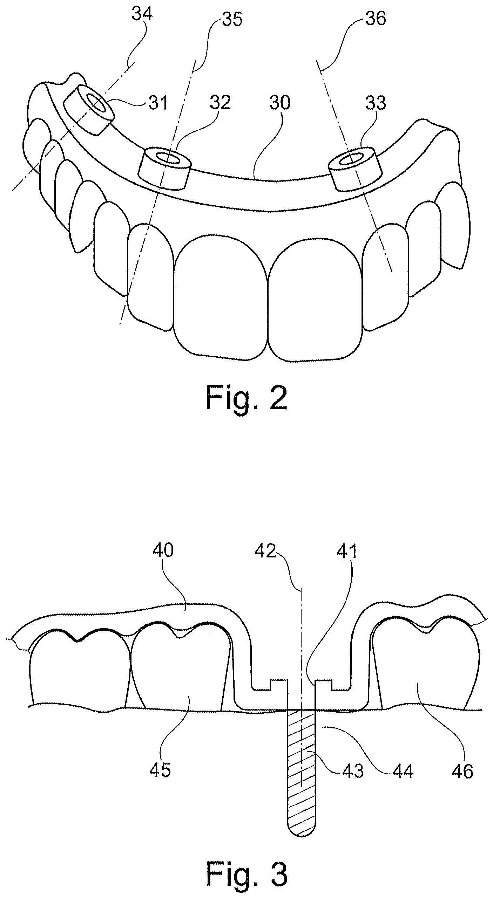

In Fig. 2 ist eine Skizze einer Brücke 30 mit einem ersten Schraubenkanal 31, einem zweiten Schraubenkanal 32 und einem dritten Schraubenkanal 33 dargestellt, wobei die dargestellte Brücke die nach dem vorliegenden Verfahren geplante Konstruktion darstellt. Dabei werden eine erste Symmetrieachse 34, eine zweite Symmetrieachse 35 des zweiten Schraubenkanals und eine dritte Symmetrieachse 36 des dritten Schraubenkanals 33 bestimmt. Die zu Fig. 1 beschriebenen Verfahrensschritte werden dabei für jede der radialsymmetrischen Durchbrechungen bzw. Schraubenkanäle 31, 32 und 33 durchgeführt, um die Symmetrieachsen 34, 35 und 36 zu bestimmen. Die Steuerungsbahn der CAM-Bearbeitungsmaschine 21 aus Fig. 1 kann dann in Abhängigkeit von den ermittelten Symmetrieachsen 34, 35 und 36 entsprechend angepasst werden, um die seitlichen Kräfte 25 auf die Werkzeuge 22 zu minimieren.

In Fig. 3 ist eine Skizze einer Bohrschablone 40 als dentale Konstruktion mit einem Bohrkanal 41 als Durchbrechung dargestellt. Mittels des vorliegenden Verfahrens wird eine Symmetrieachse 42 des Bohrkanals 41 bestimmt. Die Bohrschablone 40 dient zur Durchführung einer Implantatbohrung 43 in einem Kieferknochen 44 eines Patienten, wobei die Bohrschablone 40 auf Nachbarzähne 45 und 46 aufgesetzt wird und ein Dentalbohrer mittels des Bohrkanals 41 geführt wird. Die Bohrschablone 40 wird ebenfalls mittels der CAM-Bearbeitungsmaschine aus Fig. 1 hergestellt, wobei die Steuerungsbahnen der CAM-Bearbeitungsmaschine in Abhängigkeit von der ermittelten Symmetrieachse 42 entsprechend angepasst wird, um seitliche Kräfte auf die Werkzeuge 22 zu minimieren.

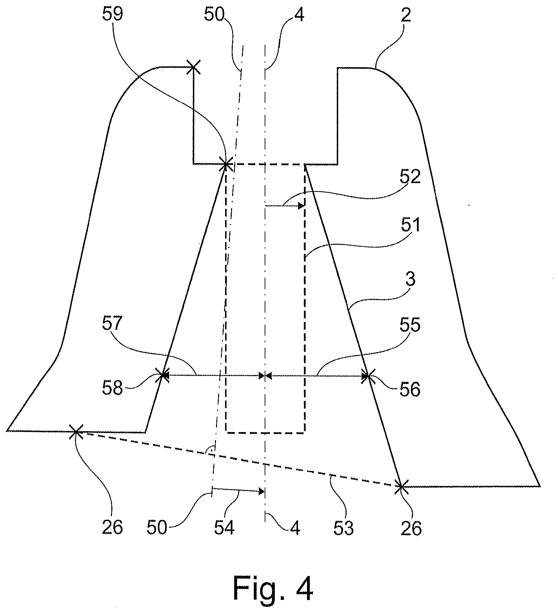

Die Fig. 4 zeigt eine Skizze zur Erläuterung des iterativen Optimierungsverfahrens bei der Ermittlung der Symmetrieachse 4 des 3D-Modells 2. Dabei wird eine vorläufige Symmetrieachse 50 unter Verwendung eines Iterationsverfahrens solange modifiziert, bis ein Zylinder 51 mit einem möglichst großen Radius 52 in die Durchbrechung 3 hineinpasst. Als Ergebnis wird also eine optimierte Symmetrieachse 4 der Durchbrechung 3 ermittelt. Die vorläufige Symmetrieachse 50 wurde im vorliegenden Fall ermittelt, indem eine geschlossene Kurve 26 aus Fig. 1 um die Durchbrechung 3 definiert wurde und eine Interpolationsebene 53 durch die Kante 26 gelegt wurde, wobei die vorläufige Symmetrieachse 50 senkrecht zur Interpolationsebene 53 angeordnet wurde. Bei der Optimierung wurde die vorläufige Symmetrieachse 50 zur optimierten Symmetrieachse 4 verschoben, wie durch den Pfeil 54 angedeutet ist, wobei sowohl die Ausrichtung als auch die Lage der vorläufigen Symmetrieachse 50 bei der Anwendung des Optimierungsverfahrens modifiziert wurde. Als ein weiteres Kriterium zur Prüfung der optimierten Symmetrieachse 4 kann die Radialsymmetrie der Durchbrechung 3 verwendet werden. Dabei kann beispielsweise überprüft werden, ob ein Innenradius 55 senkrecht zur optimierten Symmetrieachse 4 zu einem Berührpunkt 56 auf einer Innenseite der Durchbrechung 3 einem zweiten Innenradius 57 zwischen der optimierten Symmetrieachse 4 und einem zweiten Berührpunkt 58 in einer anderen Richtung senkrecht zur Symmetrieachse 4 entspricht. Im allgemeinen Fall steht die vorläufige Symmetrieachse 50 und die optimierte Symmetrieachse 4 windschief zueinander. Bei der Durchführung des Optimierungsverfahrens wird in jedem Iterationsschritt die aktuelle beste vorläufige Symmetrieachse in einer Ebene, die durch die aktuelle vorläufige Symmetrieachse 50 und einen aktuellen nächsten Punkt 59 des 3D-Modells 2 zur aktuellen vorläufigen Symmetrieachse 50 aufgespannt wird, so verschoben und gedreht, dass ein Abstand zwischen der vorläufigen Symmetrieachse und dem 3D-Modell 2 vergrößert wird. Dies wird durch den Pfeil 54 angedeutet.

### Bezugszeichen

- 1: Konstruktion
- 2: 3D-Modell
- 3: radialsymmetrische Durchbrechung/ Schraubenkanal
- 4: Symmetrieachse
- 5: Draufsicht
- 6: seitliche Schnittansicht
- 7: Titanbasis
- 8: Schraube
- 9: Richtungspfeil
- 10: Computer
- 11: Anzeigevorrichtung
- 12: Tastatur
- 13: Maus
- 14: Cursor
- 15: Loch
- 16: Aufpunkt
- 17: Randlinie
- 18: geschlossene Kurve/ Kante
- 19: Anschlussgeometrie
- 20: Oberfläche
- 21: CAM-Bearbeitungsmaschine
- 22: Werkzeuge
- 23: Rohling
- 24: Mittelachse des Werkzeugs
- 25: Richtung der seitlichen Kraft
- 30: Brücke
- 31: erster Schraubenkanal
- 32: zweiter Schraubenkanal
- 33: dritter Schraubenkanal
- 34: erste Symmetrieachse
- 35: zweite Symmetrieachse
- 36: dritte Symmetrieachse
- 40: Bohrschablone
- 41: Bohrkanal
- 42: Symmetrieachse
- 43: Implantatbohrung
- 44: Kieferknochen
- 45,: 46 Nachbarzähne
- 50: vorläufige Symmetrieachse
- 51: Zylinder
- 52: Radius
- 53: Interpolationsebene
- 54: Richtung der lokalen Optimierung
- 55: Innenradius
- 56: Punkt auf der Oberfläche des 3D-Modells
- 57: zweiter Innenradius
- 58: Punkt auf der Oberfläche des 3D-Modells
- 59: nächster Punkt

## Patentansprüche

1. Verfahren zur Planung einer dentalen Konstruktion (1), wobei ein 3D-Modell (2) der Konstruktion (1) mit mindestens einer radialsymmetrischen Durchbrechung (3) bereits vorhanden ist, **dadurch gekennzeichnet, dass** anhand des bereits vorhandenen 3D-Modells (2) der Konstruktion (1) eine Symmetrieachse (4) der mindestens einen radialsymmetrischen Durchbrechung (3) der Konstruktion (1) relativ zum 3D-Modell (2) bestimmt wird.

2. Verfahren nach Anspruch 1, **dadurch gekennzeichnet, dass** die Konstruktion (1) ein einzelnes Abutment mit einem Schraubenkanal (3), eine Brücke (30) mit mindestens einem Schraubenkanal (31, 32, 33), eine Bohrschablone (40) mit mindestens einem Bohrkanal (41), ein Abdrucklöffel mit mindestens einer Durchbrechung oder ein Modellguss mit mindestens einer Durchbrechung ist.

3. Verfahren nach Anspruch 1 oder 2, **dadurch gekennzeichnet, dass** das 3D-Modell (2) der Konstruktion (1) ein Dreiecksnetz ist und die Oberfläche der Konstruktion (1) beschreibt.

4. Verfahren nach einem der Ansprüche 1-3, **dadurch gekennzeichnet, dass** zur Bestimmung der Symmetrieachse (4) der Durchbrechung (3) das 3D-Modell (2) der Konstruktion (1) mittels einer Anzeigevorrichtung (11) dargestellt wird und virtuell so gedreht wird, dass der Benutzer virtuell durch die Durchbrechung (3) hindurchschauen kann, also dass der Benutzer in einer 2D-Projektion des 3D-Modells (2) an der Anzeigevorrichtung (11) die Durchbrechung als ein Loch (15) sieht.

5. Verfahren nach Anspruch 4, **dadurch gekennzeichnet, dass** der Benutzer einen vorläufigen Aufpunkt (16) der Symmetrieachse (4) innerhalb des Lochs (15) festlegt.

6. Verfahren nach Anspruch 4, **dadurch gekennzeichnet, dass** unter Verwendung eines computergestützten Verfahrens automatisch der Mittelpunkt des Lochs (15) bestimmt wird, der einen vorläufigen Aufpunkt (16) definiert, durch den die Symmetrieachse (4) geht.

7. Verfahren nach Anspruch 6, **dadurch gekennzeichnet, dass** bei dem computergestützten Verfahren in einer 2D-Projektion des 3D-Modells (2) das Loch (15) automatisch ermittelt wird, indem ein Schattenwurf des 3D-Modells (2) segmentiert wird und anschließend der Mittelpunkt als ein Schwerpunkt des Lochs (15) ermittelt wird.

8. Verfahren nach einem der Ansprüche 1-3, **dadurch gekennzeichnet, dass** zur Bestimmung der Symmetrieachse (4) der Durchbrechung (3) das 3D-Modell (2) der Konstruktion (1) mittels einer Anzeigevorrichtung (11) dargestellt wird, wobei durch den Benutzer auf einer Oberfläche (20) des 3D-Modells (2) eine geschlossene Kurve (18, 26) um die Durchbrechung (3) eingezeichnet wird.

9. Verfahren nach Anspruch 8, **dadurch gekennzeichnet, dass** anhand der geschlossenen Kurve (18, 26) eine Interpolationsebene (53) bestimmt wird, in der die geschlossene Kurve (18, 26) gemittelt liegt, wobei senkrecht zu der bestimmten Interpolationsebene (53) eine vorläufige Symmetrieachse (50) bestimmt wird, wobei als ein Aufpunkt der Symmetrieachse (50) ein Schwerpunkt der geschlossenen Kurve (18, 26) bestimmt wird.

10. Verfahren nach Anspruch 8 oder 9, **dadurch gekennzeichnet, dass** die geschlossene Kurve (18, 26) durch das Auswählen von Ankerpunkten auf der Oberfläche (20) der Konstruktion (1) durch den Benutzer eingezeichnet wird, wobei durch die Ankerpunkte automatisch eine Interpolationskurve gezogen wird.

11. Verfahren nach einem der Ansprüche 1-3, **dadurch gekennzeichnet, dass** zur Bestimmung der Symmetrieachse (4) der Durchbrechung (3) mittels eines computergestützten Suchalgorithmus mindestens eine Durchbrechung (3) automatisch identifiziert wird, wobei unter Verwendung eines computergestützten Algorithmus eine geschlossene Kurve (18, 26) um die Durchbrechung (3) auf einer Oberfläche (20) des 3D-Modells (2) ermittelt wird, wobei anhand der geschlossenen Kurve (18, 26) eine Interpolationsebene (53) bestimmt wird, in der die geschlossene Kurve (18, 26) gemittelt liegt, wobei senkrecht zu der bestimmten Interpolationsebene (53) eine vorläufige Symmetrieachse (50) bestimmt wird, wobei als ein Aufpunkt der Symmetrieachse (50) ein Schwerpunkt der geschlossenen Kurve bestimmt wird.

12. Verfahren nach einem der Ansprüche 8-11, **dadurch gekennzeichnet, dass** die Oberfläche (20) der Konstruktion (1) eine Bodenfläche einer Anschlussgeometrie (19) um die Durchbrechung (3) der Konstruktion (1) ist.

13. Verfahren nach Anspruch 12, **dadurch gekennzeichnet, dass** zum Festlegen der geschlossenen Kurve (18, 26) ein computergestützter Kantensuch-Algorithmus verwendet wird, der eine Kante der Bodenfläche der Anschlussgeometrie (19) automatisch erkennt und als die geschlossene Kurve (18, 26) um die Durchbrechung (3) festlegt.

14. Verfahren nach einem der Ansprüche 11-13, **dadurch gekennzeichnet, dass** bei der Anwendung des computergestützten Suchalgorithmus falsche Kandidaten für eine mögliche Symmetrieachse (4) der Durchbrechung (3) anhand festgelegter Kriterien aussortiert werden.

15. Computer, umfassend Mittel zur Ausführung des Verfahrens nach einem der Ansprüche 1-14.

## Claims

1. A method for planning a dental structure (1), wherein a 3D model (2) of the structure (1) having at least one radially symmetrical opening (3) is already available, **characterised in that,** on the basis of the already existing 3D model (2) of the structure (1), an axis of symmetry (4) of the at least one radially symmetrical opening (3) in the structure (1) is defined relative to the 3D model (2).

2. The method according to claim 1, **characterised in that** the structure (1) is a single abutment having a screw channel (3), a bridge (30) having at least one screw channel (31, 32, 33), a drilling template (40) having at least one drilling channel (41), an impression tray having at least one opening or a model casting having at least one opening.

3. The method according to claim 1 or 2, **characterised in that** the 3D model (2) of the structure (1) is a triangular network and describes the surface of the structure (1).

4. The method according to any one of claims 1-3, **characterised in that**, to determine the axis of symmetry (4) of the opening (3), the 3D model (2) of the structure (1) is displayed by means of a display device (11) and is virtually rotated such that the user can look virtually through the opening (3), i.e. such that the user sees the opening as a hole (15) in a 2D projection of the 3D model (2) on the display device (11).

5. The method according to claim 4, **characterised in that** the user defines a preliminary reference point (16) of the axis of symmetry (4) within the hole (15).

6. The method according to claim 4, **characterised in that**, using a computer-aided method, the centre of the hole (15) is automatically determined, said centre defining a preliminary reference point (16) through which the axis of symmetry (4) passes.

7. The method according to claim 6, **characterised in that**, in the computer-aided method, the hole (15) is automatically determined in a 2D projection of the 3D model (2) by segmenting a shadow cast by the 3D model (2) and then determining the centre as a centroid of the hole (15).

8. The method according to any one of claims 1-3, **characterised in that**, to determine the axis of symmetry (4) of the opening (3), the 3D model (2) of the structure (1) is displayed by means of a display device (11), wherein the user draws a closed curve (18, 26) around the opening (3) on a surface (20) of the 3D model (2).

9. The method according to claim 8, **characterised in that**, on the basis of the closed curve (18, 26), an interpolation plane (53) is determined in which the closed curve (18, 26) is averaged, wherein a preliminary axis of symmetry (50) is determined perpendicularly to the intended interpolation plane (53), wherein a centroid of the closed curve (18, 26) is determined as a reference point of the symmetry axis (50).

10. The method according to claim 8 or 9, **characterised in that** the closed curve (18, 26) is drawn by the user selecting anchor points on the surface (20) of the structure (1), wherein an interpolation curve is automatically drawn through the anchor points.

11. The method according to any one of claims 1-3, **characterised in that**, in order to determine the axis of symmetry (4) of the opening (3), at least one opening (3) is automatically identified using a computer-aided search algorithm, wherein a closed curve (18, 26) around the opening (3) on a surface (20) of the 3D model (2) is determined by using a computer-aided algorithm, wherein the closed curve (18, 26) is used to determine an interpolation plane (53) in which the closed curve (18, 26) is averaged, wherein a preliminary axis of symmetry (50) is determined perpendicularly to the determined interpolation plane (53), a centroid of the closed curve being determined as a reference point of the axis of symmetry (50).

12. The method according to any one of claims 8-11, **characterised in that** the surface (20) of the structure (1) is a base surface of a connection geometry (19) around the opening (3) of the structure (1).

13. The method according to claim 12, **characterised in that** a computer-aided edge search algorithm is used to determine the closed curve (18, 26) and automatically detects an edge of the base surface of the connection geometry (19) and defines it as the closed curve (18, 26) around the opening (3).

14. The method according to any one of claims 11-13, **characterised in that**, when the computer-aided search algorithm is used, incorrect candidates for a possible axis of symmetry (4) of the opening (3) are discarded on the basis of defined criteria.

15. A computer comprising means for executing the method according to any one of claims 1-14.

## Revendications

1. Procédé de planification d'une construction (1) dentaire, dans lequel un modèle 3D (2) de ladite construction (1), comportant au moins une ouverture (3) radialement symétrique, est déjà existant, **caractérisé en ce que,** à l'aide du modèle 3D (2) déjà existant de la construction (1), un axe de symétrie (4) de l'au moins une ouverture (3) radialement symétrique de la construction (1) par rapport au modèle 3D (2) est déterminé.

2. Procédé selon la revendication 1, **caractérisé en ce que** la construction (1) est un seul pilier, comportant un canal de vis (3), un pont (30) comportant au moins un canal de vis (31, 32, 33), un gabarit de perçage (40) comportant au moins un canal de perçage (41), un porteempreinte comportant au moins une ouverture, ou un modèle moulé comportant au moins une ouverture.

3. Procédé selon la revendication 1 ou 2, **caractérisé en ce que** le modèle 3D (2) de la construction (1) est un réseau triangulaire et décrit la surface de la construction (1).

4. Procédé selon l'une quelconque des revendications 1 à 3, **caractérisé en ce que**, pour déterminer l'axe de symétrie (4) de l'ouverture (3), le modèle 3D (2) de la construction (1) est représenté au moyen d'un dispositif d'affichage (11) et est virtuellement tourné de telle sorte que l' utilisateur peut virtuellement regarder à travers l'ouverture (3), c'est-à-dire que l'utilisateur voit, dans une projection 2D du modèle 3D (2) sur le dispositif d'affichage (11), l'ouverture en tant qu'un trou (15).

5. Procédé selon la revendication 4, **caractérisé en ce que** l'utilisateur définit un point de repère (16) temporaire de l'axe de symétrie (4) à l'intérieur du trou (15).

6. Procédé selon la revendication 4, **caractérisé en ce que**, à l'aide d'un procédé assisté par ordinateur, le centre du trou (15), est automatiquement déterminé, lequel définit un point de repère (16) temporaire par lequel passe l'axe de symétrie (4).

7. Procédé selon la revendication 6, **caractérisé en ce que** dans le procédé assisté par ordinateur, dans une projection 2D du modèle 3D (2), le trou (15) est automatiquement déterminé, dans lequel une projection d'ombre du modèle 3D (2) est segmentée, puis le centre est déterminé en tant qu'un centre de gravité du trou (15).

8. Procédé selon l'une quelconque des revendications 1 à 3, **caractérisé en ce que**, pour déterminer l'axe de symétrie (4) de l'ouverture (3), le modèle 3D (2) de la construction (1) est représenté au moyen d'un dispositif d'affichage (11), dans lequel, l'utilisateur dessine, sur une surface (20) du modèle 3D (2), une courbe (18, 26) fermée autour de l'ouverture (3).

9. Procédé selon la revendication 8, **caractérisé en ce que**, à l'aide de la courbe (18, 26) fermée, un plan d'interpolation (53) est déterminé, dans lequel la courbe (18, 26) fermée se trouve moyennée, dans lequel, perpendiculairement au plan d'interpolation (53) déterminé, un axe de symétrie (50) temporaire est déterminé, dans lequel un centre de gravité de la courbe (18, 26) fermée est déterminé en tant que point de repère de l'axe de symétrie (50).

10. Procédé selon la revendication 8 ou 9, **caractérisé en ce que** la courbe fermée (18, 26) est dessinée par l'utilisateur, par sélection des points d'ancrage sur la surface (20) de la construction (1), dans lequel, au moyen des points d'ancrage, une courbe d'interpolation est automatiquement générée.

11. Procédé selon l'une quelconque des revendications 1 à 3, **caractérisé en ce que**, pour déterminer l'axe de symétrie (4) de l'ouverture (3), au moyen d'un algorithme de recherche assisté par ordinateur, au moins une ouverture (3) est automatiquement identifiée, dans lequel, à l'aide de l'algorithme de recherche assisté par ordinateur, une courbe (18, 26) fermée autour de l'ouverture (3) sur une surface (20) du modèle 3D (2) est déterminée, dans lequel, en fonction de la courbe (18, 26) fermée, un plan d'interpolation (53) est déterminé, dans lequel la courbe (18, 26) fermée se trouve moyennée, dans lequel, perpendiculairement au plan d'interpolation (53) déterminé, un axe de symétrie (50) temporaire est déterminé, dans lequel un centre de gravité de la courbe fermée est déterminé en tant que point de repère de l'axe de symétrie (50).

12. Procédé selon l'une quelconque des revendications 8 à 11, **caractérisé en ce que** la surface (20) de la construction (1) est une surface inférieure d'une géométrie de raccordement (19) autour de l'ouverture (3) de la construction (1).

13. Procédé selon la revendication 12, **caractérisé en ce que**, pour déterminer la courbe (18, 26) fermée, un algorithme de recherche de bord assisté par ordinateur est utilisé, lequel détecte automatiquement un bord de la surface inférieure de la géométrie de raccordement (19) et définit celui-ci en tant que courbe (18, 26) fermée autour de l'ouverture (3).

14. Procédé selon l'une quelconque des revendications 11 à 13, **caractérisé en ce que** lors de l'utilisation de l'algorithme de recherche assisté par ordinateur, les candidats incorrects pour un éventuel axe de symétrie (4) de l'ouverture (3) sont triés en fonction de critères définis.

15. Ordinateur, comprenant un moyen de mise en œuvre du procédé selon l'une quelconque des revendications 1 à 14.
